# EUROPÄISCHE PATENTSCHRIFT

(11) **EP 3 405 655 B1**
(45) Veröffentlichungstag und Bekanntmachung des Hinweises auf die Patenterteilung: **11.03.2020**
(21) Anmeldenummer: 16801775.4
(22) Anmeldetag: 28.11.2016
(51) Int. Cl.: F01D 17/14, F02B 37/22, F02C 6/12

(54) **TURBOLADER MIT SCHIEBER ZUR FLUTENVERBINDUNG**
TURBOCHARGER COMPRISING A SLIDER FOR FLUID CONNECTION
TURBOCOMPRESSEUR À TIROIR POUR LA COMMUNICATION DE FLUX

(30) Priorität: 21.01.2016 DE 102016200812
(43) Veröffentlichungstag der Anmeldung: 28.11.2018
(73) Patentinhaber: Bayerische Motoren Werke Aktiengesellschaft, 80809 München (DE)
(72) Erfinder: BOCHSKANL, Eugen, 85375 Neufahrn (DE); BAUER, Josef, 80992 München (DE)
(86) Internationale Anmeldenummer: PCT/EP2016/078932
(87) Internationale Veröffentlichungsnummer: WO 2017/125186

(56) Entgegenhaltungen:
- DE-A1- 3 145 835
- DE-A1- 4 008 508
- US-A- 3 423 926

## Beschreibung

Die Erfindung betrifft einen Turbolader gemäß Anspruch 1. Darüber hinaus betrifft die Erfindung ein Kraftfahrzeug mit solch einem Turbolader.
Es sind Abgasturbolader bekannt bei denen eine Turbine von zwei Flutenkanälen, d.h. zwei voneinander getrennten Abgasströmen, gespeist wird. Über eine Flutenverbindungsöffnung, d.h. eine verschließbare Öffnung, sind die beiden Flutenkanäle wahlweise miteinander verbindbar. Bei einem Vierzylinder-Verbrennungsmotor führt beispielsweise einer der Flutenkanäle den Abgasstrom aus dem 1. und 4. Zylinder und der andere der Flutenkanäle den Abgasstrom aus dem 2. und 3. Zylinder zum Eingang der Turbine des Abgasturboladers. In einem Niederlastbereich ist es vorteilhaft, wenn die Flutenverbindungsöffnung geschlossen ist, damit sich Pulsationen eines Zylinders nicht auf die anderen Zylinder übertragen. Außerdem führt die geschlossene Flutenverbindungsöffnung hinsichtlich eines einzelnen Zylinders zu einem engeren Querschnitt des Abgasstroms vom Zylinder zum Turbineneingang, was im Niedriglastbereich zu einer besseren Energieausnutzung führt. Im Nenn- oder Hochleistungsbereich ist ein größerer Querschnitt vorteilhaft, so dass die Flutenverbindungsöffnung offen ist und somit die von einem der Zylinder kommenden Abgase stromabwärts der Flutenverbindungsöffnung in beiden Flutenkanälen strömen können (Querschnittsvergrößerung). Dies führt auch dazu, dass im Nennleistungsbereich der Abgasgegendruck gesenkt werden kann.
Bisherige Flutenverbindungen sind entweder als Drosselklappe, als Klappenventil oder als Tellerventil ausgeführt. Diese Lösungen haben den Nachteil, dass sie den Strömungsverlauf beeinflussen können, weil sie auch im offenen Zustand teilweise in die Strömung ragen oder es sind aufwendigere Maßnahmen erforderlich, dies zu vermeiden. Ein anderer Nachteil ist, dass die bisherigen Lösungen viel Bauraum beanspruchen.

Aus der US 3 423 926 A ist ein Turbolader bekannt. Jedoch ist bei derartigen Turboladern schwierig, eine gute, verkantungsfreie Führung des Schiebers zu realisieren und die Öffnung für den Schieber möglichst dicht zu halten.
Ferner ist aus der DE 31 45 835 A1 ein Verfahren zum Betreiben eines Abgasturboladers einer Kolben-Brennkraftmaschine bekannt. Darüber hinaus ist aus der DE 40 08 508 A1 ein Turbolader gemäß den Oberbegriff des Anspruchs 1 bekannt.

Aufgabe der Erfindung ist es, einen Turbolader mit einer Verbindung der Flutenkanäle zu versehen, die vorteilhafte Strömungseigenschaften aufweist und gut betätigbar ist. Diese Aufgabe wird mit einem Turbolader gemäß Anspruch 1 und einem Fahrzeug gemäß Anspruch 10 gelöst. Vorteilhafte Weiterbildungen der Erfindung sind Gegenstand der abhängigen Ansprüche.

Gemäß der Erfindung wird ein Turbolader mit einer Turbine zu der Abgase aus zwei Flutenkanälen zuführbar sind bereitgestellt, zwischen denen eine Trennwand verläuft, in der eine verschließbare Flutenverbindungsöffnung ausgebildet ist, wobei die Flutenverbindungsöffnung durch einen plattenförmigen Schieber verschließbar ist, der entlang seiner Plattenebene zwischen die Flutenkanäle schiebbar ist. Ferner weist der Turbolader ein Gehäuse auf, in dem die Flutenkanäle ausgebildet sind, und eine an dem Gehäuse befestigbare Abdeckung, in welcher der Schieber im geöffneten Zustand der Flutenverbindungsöffnung zumindest hälftig aufgenommen ist. Dabei ist zwischen der Abdeckung und dem Gehäuse eine Führungsscheibe angeordnet, die von der Abdeckung gegen das Gehäuse gedrückt wird und die einen Führungsspalt aufweist, dessen Abmessung in einer Normalrichtung zur Plattenebene des Schiebers im Wesentlichen der des Schiebers entspricht. Die Erfindung gemäß Anspruch 1 hat den Vorteil, dass es ermöglicht, dass der Schieber seitlich der Kanäle angeordnet wird und dadurch mit großem Durchmesser und ausreichend lang ausgeführt werden kann, um eine gute Betätigung und gute Abdichtung sicherzustellen, ohne die Strömung negativ zu beeinflussen. Im offenen und geschlossenen Zustand des Schiebers liegen keine Störkörper in den beiden Flutenkanälen. Bei offenem Schieber kann die Übersprechströmung durch die direkt benachbarte Lage der Flutenkanäle sehr günstig gestaltet werden. Insgesamt lassen sich günstigere Strömungsverhältnisse als beim Stand der Technik erreichen. Durch die Verwendung eines Schiebers und die damit mögliche externe Lage kann die Führung mit den erforderlichen Führungsflächen und Spielen versehen und dadurch einem Klemmen vorgebeugt werden. Außerdem wird die Führung durch ihre externe Lage den höheren Temperaturen entzogen. Ferner sind Gaskräfte großteils senkrecht zur Bewegungsrichtung des Schiebers, sodass sich geringe Haltekräfte im Verstellsystem ergeben. Eine Funktion der Führungsscheibe ist die Abdichtung der Flutenkanäle gegenüber der Abdeckung oder zumindest die Verminderung des Einströmens von Abgas. Außerdem dient die Führungsscheibe als Verdrehsicherung für den Schieber.
Gemäß einem weiteren Ausführungsbeispiel der Erfindung ist im geschlossenen Zustand des Schiebers, ein Vorderende des Schiebers innerhalb der Flutenverbindungsöffnung angeordnet und es liegt eine Außenfläche des Schiebers an einer Innenfläche der Flutenverbindungsöffnung an.
Gemäß einem weiteren Ausführungsbeispiel der Erfindung verjüngt sich der Schieber in seiner Plattenebene und quer zu einer Schieberichtung zu einem Vorderende hin. Der Vorteil dieses Ausführungsbeispiel ist, dass sich der Schieber durch diese Form unmittelbar nach Beginn der Öffnungsbewegung aus der vollständig geschlossenen Stellung, von der Innenfläche der Flutenverbindungsöffnung löst, wodurch eine leichtgängige Öffnungsbetätigung ermöglicht und ein Verklemmen zwischen Schieber und Flutenverbindungsöffnung vermieden wird. Diese Form ermöglicht des Weiteren, dass der Schieber im geschlossenen Zustand mit Vorspannung an der gesamten Innenfläche der Flutenverbindungsöffnung anliegen kann.

Gemäß einem weiteren Ausführungsbeispiel der Erfindung ist aus einer Innenfläche der Flutenverbindungsöffnung und einer Außenfläche des Schiebers eine konkav und die andere konvex ausgebildet. Der Vorteil dieser Ausführung ist, dass der Schieber somit während des Schließvorgangs geführt wird und beim Schließvorgang die Außenfläche des Schiebers in die Innenfläche der Flutenverbindungsöffnung einfädelt. Außerdem kann die Innenfläche dadurch im vollständig geschlossenen Zustand des Schiebers in Richtung der z-Achse Kräfte aufnehmen.

Gemäß einem weiteren Ausführungsbeispiel der Erfindung hat der Turbolader ein Schiebeelement an dessen einem Ende der Schieber ausgebildet ist und das einen plattenförmigen Führungsteller aufweist, dessen Plattenebene senkrecht zur Plattenebene des Schiebers ist, wobei der Führungsteller des Schiebeelements eine Schiebebewegung des Schiebers begrenzt.

Gemäß einem weiteren Ausführungsbeispiel der Erfindung wird der Führungsteller von einer Innenfläche der Abdeckung geführt. Somit erfüllt die Abdeckung sowohl Führungs- als auch Dichtungsaufgaben.

Gemäß einem weiteren Ausführungsbeispiel der Erfindung weist das Schiebeelement auf der dem Schieber entgegengesetzten Seite bezüglich des Führungstellers einen Führungsschaft auf, der von einer Führungshülse umgeben wird, die wiederum von der Abdeckung gehalten wird.

Gemäß einem weiteren Ausführungsbeispiel der Erfindung greift in den Führungsschaft eine Aktuatorstange zum Betätigen des Schiebeelements mittels Kugelgelenk ein. Durch die Anbindung mittels Kugelgelenk können Fertigungs- oder Einbautoleranzen ausgeglichen werden.

Gemäß einem weiteren Ausführungsbeispiel der Erfindung weist der Führungsteller Durchgangsbohrungen oder an seinem Außenumfang angebrachte Nuten auf. Damit werden Druckdifferenzen beim Öffnen und Schließen des Schiebers vermieden.

Darüber hinaus betrifft die Erfindung ein Kraftfahrzeug mit einem Turbolader gemäß einem der vorhergehenden Ansprüche.

Nachfolgend werden bevorzugte Ausführungsbeispiele der vorliegenden Erfindung unter Bezugnahme auf die beigefügten Zeichnungen beschrieben. In diesen Zeichnungen ist Folgendes dargestellt:
- Figur 1: zeigt einen Turbolader gemäß einem Ausführungsbeispiel der Erfindung;
- Figur 2a: zeigt eine dreidimensionale Schnittdarstellung eines zweiflutigen Eingangsbereichs einer Turbine des Turboladers gemäß einem Ausführungsbeispiel der Erfindung, wobei ein geschlossener Schieber eine Flutenverbindungsöffnung verschließt;
- Figur 2b: den Gegenstand der Fig. 2a mit geöffnetem Schieber zur Öffnung der Flutenverbindungsöffnung;
- Figur 3a: zeigt eine Innenfläche der Flutenverbindungsöffnung sowie eine Außenfläche des Schiebers gemäß einem ersten Ausführungsbeispiel der Erfindung, und
- Figur 3b: zeigt eine Innenfläche der Flutenverbindungsöffnung sowie eine Außenfläche des Schiebers gemäß einem zweiten Ausführungsbeispiel der Erfindung.

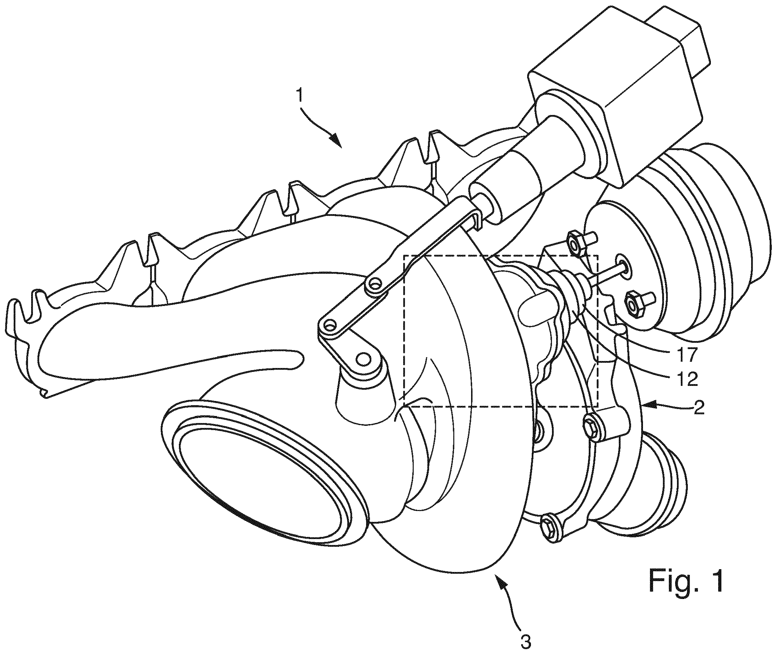

Figur 1 zeigt einen Turbolader 1 mit einem Verdichter 2 zum Verdichten einer Ansaugluft eines Verbrennungsmotors, insbesondere für ein Kraftfahrzeug. Der Verdichter 2 ist auf derselben Welle wie eine Turbine 3 angeordnet, welche von aus Zylindern des Verbrennungsmotors austretenden Abgasströmen angetrieben wird und somit den drehfest mit ihr verbundenen Verdichter 2 antreibt. Der mit gestrichelter Linie dargestellte Rahmen kennzeichnet in etwa den im Folgenden detaillierter beschriebenen Eingangsbereich der Turbine 3.

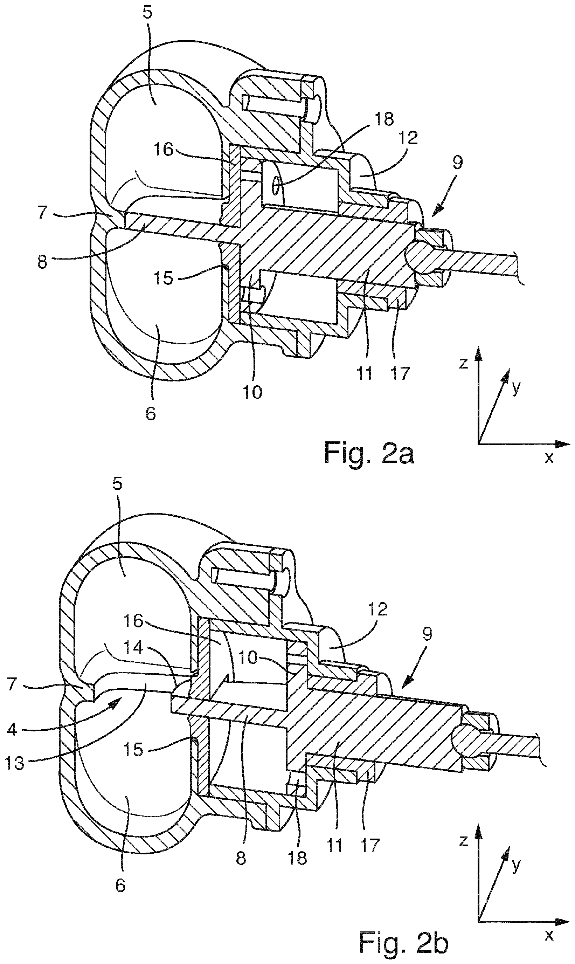

Die Figuren 2a und 2b zeigen eine dreidimensionale Schnittdarstellung eines zweiflutigen Eingangsbereichs der Turbine 3 des Turboladers 1 gemäß einem Ausführungsbeispiel der Erfindung. In Figur 2a ist eine Flutenverbindungsöffnung 4 verschlossen und in Figur 2b ist sie offen.

Beim Turbolader 1 führen zwei Flutenkanäle 5 und 6 von nicht dargestellten Zylindern des Verbrennungsmotors zu einem Lufteingang der Turbine 3. Die Flutenkanäle 5 und 6 sind dabei voneinander getrennte Strömungskanäle, die im selben Gehäuse ausgebildet sind, von dem auch die Turbine aufgenommen wird. Zwischen den Flutenkanälen 5 und 6 ist eine Trennwand 7, ein sog. Flutenteiler, welche die direkt benachbarten Flutenkanäle 5 und 6 voneinander trennt. Die Wandungen der Flutenkanäle 5 und 6 sind einstückig, insbesondere monolithisch, mit dem die Turbine aufnehmenden Gehäuse ausgebildet. Zwischen einem turbinenseitigen Ende und einem zylinderseitigen Ende sind die Flutenkanäle 5 und 6 über die Flutenverbindungsöffnung 4 miteinander verbunden. Außer dieser Flutenverbindungsöffnung 4 besteht zwischen dem turbinenseitigen Ende und dem zylinderseitigen Ende der Flutenkanäle 5 und 6 keine Fluidverbindung. Die Flutenverbindungsöffnung 4 ist mittels eines Schiebers 8 schließbar, so dass die Flutenkanäle 5 und 6 zwischen dem turbinenseitigen Ende und dem zylinderseitigen Ende vollständig voneinander getrennt sind. Andererseits kann bei zurückgezogenem Schieber 8 die Flutenverbindungsöffnung 4 freigegeben werden, so dass die Flutenverbindungsöffnung 4 offen ist. Bevorzugt wird im Betrieb nur die vollständig geöffnete und die vollständig geschlossene Stellung des Schiebers 8 angewandt, es sind aber auch Zwischenstellungen denkbar und möglich. Die Vorteile und Gründe für ein Öffnen und Schließen der Flutenverbindungsöffnung 4 sind bereits in der Beschreibungseinleitung genannt und sollen hier nicht wiederholt werden.

Der Schieber 8 ist in diesem Ausführungsbeispiel als Abschnitt eines Schiebeelements 9 ausgebildet, welches an einem Vorderende den Schieber 8, anschließend dazu einen Führungsteller 10 und anschließend an diesen einen Führungsschaft 11 aufweist. Der Führungsteller 10 ist vollständig in einer Abdeckung 12 aufgenommen, welche direkt an dem die Flutenkanäle ausbildende Gehäuse befestigt ist, beispielsweise angeschraubt.

In den Figuren 2a und 2b ist jeweils ein rechtwinkliges Koordinatensystem eingezeichnet, dessen x-Achse einer Längsrichtung des Schiebeelements 9 und des Schiebers 8 entspricht, entlang der das Schiebeelement 9 / der Schieber 8 verschiebbar ist. Die y-Achse steht senkrecht zur x-Achse und die z-Achse steht senkrecht zur x- und y-Achse.

Der Schieber 8 ist plattenförmig, vorzugsweise mit einer ebenen Oberseite und einer ebenen Unterseite die parallel zueinander verlaufen. Die Plattenform des Schiebers spannt somit eine Ebene auf, die parallel zur xy-Ebene ist. Der Schieber 8 verjüngt sich in seiner Plattenebene senkrecht zur Längsachse, d.h. parallel zur y-Achse, zu seinem Vorderende hin bzw. zu seinem Führungsende hin. Das Vorderende des Schiebers 8 ist abgerundet. Die Flutenverbindungsöffnung 4 ist innerhalb der xy-Ebene im Wesentlichen U-förmig mit trapezförmiger Verjüngung mit der offenen Seite zum Schieber 8 hin. Wenn entlang der z-Achse blickend, entspricht ein Konturverlauf einer Innenfläche 13 der Flutenverbindungsöffnung 4, welche zum Schieber 8 weist, einem Konturverlauf einer Außenfläche 14 des Schieber 8, welche zur Innenfläche 13 weist. Im geschlossenen Zustand des Schiebers 8 liegt die Außenfläche 14 des Schiebers 8 über die gesamte Länge der Innenfläche 13 an diese an und idealerweise ist dann die Flutenverbindungsöffnung 4 fluiddicht geschlossen. Eine Öffnung 15, durch welche sich im zusammengebauten Zustand der Schieber 8 erstreckt, ist dazu vorgesehen, im Herstellungsprozess die Flutenverbindungsöffnung 4 auszubilden und/oder die Innenfläche 13 zu bearbeiten. Zur Schließung dieser Öffnung 15 ist eine Führungsscheibe 16 vorgesehen. Die plattenförmig mit kreisrundem Außenumfang ausgebildet ist. Mittig ist ein Spalt vorgesehen, der so dimensioniert ist, dass der Schieber 8 im geschlossenen Zustand passgenau hindurchpasst. Die Führungsscheibe 16 wird von der Abdeckung 12 gegen das die Flutenkanäle bildende Gehäuse gedrückt und somit fixiert. Eine Funktion ist die Abdichtung der Flutenkanäle 5, 6 gegenüber der Abdeckung 12 oder zumindest die Verminderung des Einströmens von Abgas. Außerdem dient die Führungsscheibe 15 als Verdrehsicherung für den Schieber 8.

Der Führungsteller 10 ist plattenförmig, vorzugsweise in Form einer Scheibe mit kreisrundem Außenumfang. Die radial nach außen weisende Fläche des Führungstellers 10 gleitet an einer Innenfläche eines ersten zylinderförmigen Abschnitts der Abdeckung 12, wodurch der Führungsteller 10 beim Verschieben von der Innenfläche der Abdeckung 12 geführt wird. Benachbart, auf der flutenkanalabgewandten Seite ist die Abdeckung 12 mit einem zweiten zylinderförmigen Abschnitt kleineren Durchmessers als der erste zylinderförmige Abschnitt versehen. Beide zylinderförmigen Abschnitte sind über eine Stirnwand verbunden. In den zweiten zylinderförmigen Abschnitt ist eine Führungshülse 17 eingefügt, die den Führungsschaft 11 führt.

Die Bewegung des Schiebeelements 9 kann in eine Einschieberichtung bzw. Schließrichtung durch Anschlag des Führungstellers 10 an die Führungsscheibe 16 und/oder durch Anschlag der Außenfläche 14 an die Innenfläche 13 begrenzt werden. Im geschlossenen Zustand liegt die Außenfläche 14 des Schiebers unter Vorspannung an der Innenfläche 13 der Flutenverbindungsöffnung 4 an, so dass eine möglichst gute Abdichtung erreicht wird. Außerdem kann auch der Führungsteller 10 unter Vorspannung an die Führungsscheibe 16 anliegen, so dass auch zwischen diesen Elementen eine möglichst gute Abdichtung erreicht wird.

Die Bewegung des Schiebeelements 9 kann in eine Herausziehrichtung bzw. Öffnungsrichtung durch Anschlag des Führungstellers 10 an eine Innenseite der Stirnwand der Abdeckung 12 begrenzt werden. Im vollständig geöffneten Zustand liegt der Führungsteller 10 unter Vorspannung an der Stirnwand der Abdeckung 12 an, so dass dazwischen eine möglichst gute Abdichtung erreicht wird.

Zur Vermeidung von Druckdifferenzen beim Öffnen und Schließen des Schiebers 8 ist der Führungsteller 10 mit Durchgangsbohrungen 18 oder am Außenumfang eingebrachten Ausnehmungen oder Nuten (nicht dargestellt) versehen.

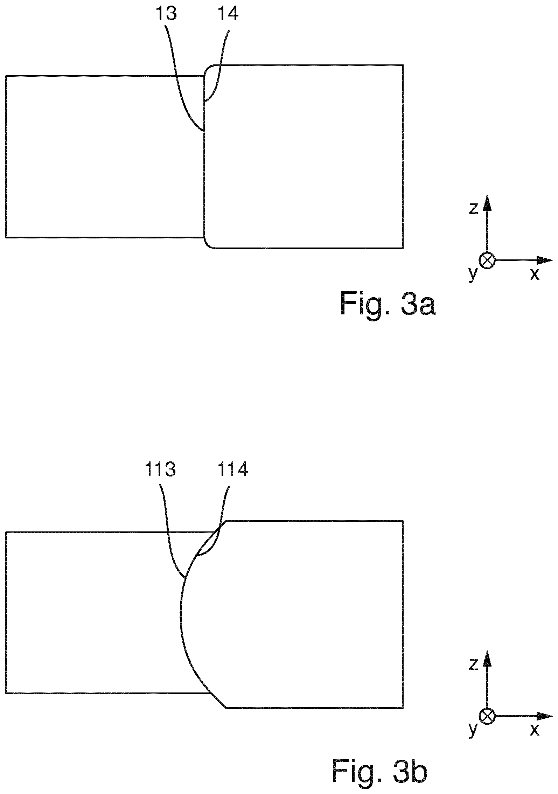

Figur 3a zeigt die Innenfläche 13 der Flutenverbindungsöffnung 4 sowie die Außenfläche 14 des Schiebers 8 gemäß einem ersten Ausführungsbeispiel der Erfindung. Im dargestellten Zustand ist der Schieber 8 vollständig geschlossen, so dass die Innenfläche 13 an die Außenfläche 14 anliegt. Wie zu erkennen ist verläuft sowohl die Innenfläche 13 als auch die Außenfläche 14, insbesondere über ihre gesamte Länge, geradlinig und parallel zur z-Achse.

Figur 3b zeigt eine Innenfläche 113 der Flutenverbindungsöffnung 4 sowie eine Außenfläche 114 des Schiebers 8 gemäß einem zweiten Ausführungsbeispiel der Erfindung. Im dargestellten Zustand ist der Schieber 8 vollständig geschlossen, so dass die Innenfläche 113 an die Außenfläche 114 anliegt. Die Innenfläche 113 und die Außenfläche 114 unterscheiden sich von der Innenfläche 13 und der Außenfläche 14 jeweils lediglich in der im Folgenden beschriebenen Kontur. In einem Querschnitt in einer xz-Ebene ist die Kontur der Innenfläche 113 konkav und die Kontur der Außenfläche 114 konvex. Dies könnte auch umgekehrt sein. Der Vorteil dieser Ausführung ist, dass der Schieber 8 somit während des Schließvorgangs geführt wird und beim Schließvorgang die Außenfläche 114 des Schiebers 8 in die Innenfläche 113 der Flutenverbindungsöffnung 4 einfädelt. Außerdem kann die Innenfläche 113 dadurch im vollständig geschlossenen Zustand des Schiebers 8 in Richtung der z-Achse Kräfte aufnehmen.

Während die Erfindung detailliert in den Zeichnungen und der vorangehenden Beschreibung veranschaulicht und beschrieben wurde, ist diese Veranschaulichung und Beschreibung als veranschaulichend oder beispielhaft und nicht als beschränkend zu verstehen und es ist nicht beabsichtigt die Erfindung auf die offenbarten Ausführungsbeispiele zu beschränken. Die bloße Tatsache, dass bestimmte Merkmale in verschiedenen abhängigen Ansprüchen genannt sind, soll nicht andeuten, dass eine Kombination dieser Merkmale nicht auch vorteilhaft genutzt werden könnte.

## Patentansprüche

1. Turbolader (1) mit einer Turbine (3) zu der Abgase aus zwei, in einem Gehäuse ausgebildeten Flutenkanälen (5, 6) zuführbar sind, zwischen denen eine Trennwand (7) verläuft, in der eine verschließbare Flutenverbindungsöffnung (4) ausgebildet ist, wobei die Flutenverbindungsöffnung (4) durch einen plattenförmigen Schieber (8) verschließbar ist, der entlang seiner Plattenebene (xy) zwischen die Flutenkanäle (5, 6) schiebbar ist, mit einer an dem Gehäuse befestigbaren Abdeckung (12), in welcher der Schieber (8) im geöffneten Zustand der Flutenverbindungsöffnung (4) zumindest hälftig aufgenommen ist, **dadurch gekennzeichnet, dass** zwischen der Abdeckung (12) und dem Gehäuse eine Führungsscheibe (16) angeordnet ist, die von der Abdeckung (12) gegen das Gehäuse gedrückt wird und die einen Führungsspalt aufweist, dessen Abmessung in einer Normalrichtung zur Plattenebene des Schiebers im Wesentlichen der des Schiebers entspricht.

2. Turbolader (1) gemäß Anspruch 1, wobei im geschlossenen Zustand des Schiebers (8), ein Vorderende des Schiebers (8) innerhalb der Flutenverbindungsöffnung (4) angeordnet ist und eine Außenfläche (14; 114) des Schiebers (8) an einer Innenfläche (13; 113) der Flutenverbindungsöffnung (4) anliegt.

3. Turbolader (1) gemäß einem der vorhergehenden Ansprüche, wobei sich der Schieber (8) in seiner Plattenebene (xy) und quer (y) zu einer Schieberichtung (x) zu einem Vorderende hin verjüngt.

4. Turbolader (1) gemäß einem der vorhergehenden Ansprüche, wobei aus einer Innenfläche (113) der Flutenverbindungsöffnung (4) und einer Außenfläche (114) des Schiebers (8) eine konkav und die andere konvex ausgebildet ist.

5. Turbolader (1) gemäß einem der vorhergehenden Ansprüche, mit einem Schiebeelement (9) an dessen einem Ende der Schieber (8) ausgebildet ist und das einen plattenförmigen Führungsteller (10) aufweist, dessen Plattenebene (yz) senkrecht zur Plattenebene (xy) des Schiebers (8) ist, wobei der Führungsteller (10) des Schiebeelements (9) eine Schiebebewegung des Schiebers (8) begrenzt.

6. Turbolader (1) gemäß Anspruch 5, wobei der Führungsteller (10) von einer Innenfläche der Abdeckung (12) geführt wird.

7. Turbolader (1) gemäß Anspruch 5, wobei das Schiebeelement (9) auf der dem Schieber (8) entgegengesetzten Seite bezüglich des Führungstellers (10) einen Führungsschaft (11) aufweist, der von einer Führungshülse (17) umgeben wird, die wiederum von der Abdeckung (12) gehalten wird.

8. Turbolader (1) gemäß Anspruch 7, wobei in den Führungsschaft (11) eine Aktuatorstange zum Betätigen des Schiebeelements (9) mittels Kugelgelenk eingreift.

9. Turbolader (1) gemäß einem der Ansprüche 5 bis 8, wobei der Führungsteller (10) Durchgangsbohrungen (18) oder an seinem Außenumfang angebrachte Nuten aufweist.

10. Kraftfahrzeug mit einem Turbolader (1) gemäß einem der vorhergehenden Ansprüche.

## Claims

1. A turbocharger (1) with a turbine (3) to which exhaust gases can be supplied from two scroll ducts (5, 6) which are formed in a housing and between which a partition (7) runs in which a closable scroll connection opening (4) is formed, wherein the scroll connection opening (4) can be closed by a plate-shaped slider (8) which can be pushed along its plate plane (xy) between the scroll ducts (5, 6),
with a covering means (12) which can be fastened to the housing, in which covering means the slider (8) is at least half accommodated in the opened state of the scroll connection opening (4), **characterised in that** a guide disc (16) is arranged between the covering means (12) and the housing, which disc is pressed by the covering means (12) against the housing and which has a guide gap, the dimension of which in a normal direction to the plate plane of the slider substantially corresponds to that of the slider.

2. A turbocharger (1) according to Claim 1, wherein, in the closed state of the slider (8), a front end of the slider (8) is arranged within the scroll connection opening (4) and an outer face (14; 114) of the slider (8) bears against an inner face (13; 113) of the scroll connection opening (4).

3. A turbocharger (1) according to one of the preceding claims, wherein the slider (8) tapers towards a front end in its plate plane (xy) and transversely (y) to a sliding direction (x).

4. A turbocharger (1) according to one of the preceding claims, wherein, of an inner face (113) of the scroll connection opening (4) and an outer face (114) of the slider (8), one is designed to be concave and the other convex.

5. A turbocharger (1) according to one of the preceding claims, with a sliding element (9) on the one end of which the slider (8) is formed and which has a plate-shaped guide plate (10), the plate plane (yz) of which is perpendicular to the plate plane (xy) of the slider (8), wherein the guide plate (10) of the sliding element (9) limits a sliding movement of the slider (8).

6. A turbocharger (1) according to Claim 5, wherein the guide plate (10) is guided by an inner face of the covering means (12).

7. A turbocharger (1) according to Claim 5, wherein the sliding element (9) has on the side opposite the slider (8) with respect to the guide plate (10) a guide shaft (11) which is surrounded by a guide sleeve (17) which in turn is held by the covering means (12).

8. A turbocharger (1) according to Claim 7, wherein an actuator rod for actuating the sliding element (9) engages in the guide shaft (11) by means of a ball-and-socket joint.

9. A turbocharger (1) according to one of Claims 5 to 8, wherein the guide plate (10) has through bores (18) or grooves which are arranged on its outer periphery.

10. A motor vehicle with a turbocharger (1) according to one of the preceding claims.

## Revendications

1. Turbocompresseur (1) comprenant une turbine (3) vers laquelle peuvent être transférés des gaz d'échappement provenant de deux canaux de flux (5, 6) formés dans un carter, entre lesquels s'étend une paroi de séparation (7) dans laquelle est formée une ouverture de liaison des flux (4) pouvant être fermée, l'ouverture de liaison des flux (4) pouvant être fermée par un coulisseau en forme de plaque (8) pouvant être déplacé en translation le long de son plan (xy) entre les canaux de flux (5, 6), comportant un élément de recouvrement (12) pouvant être fixé au carter dans lequel, lorsque l'ouverture de liaison des flux (4) est à l'état ouvert le coulisseau (8) peut être logé au moins par moitié,
**caractérisé en ce qu'**
entre l'élément de recouvrement (12) et le carter est installé un disque de guidage (16) qui est comprimé contre le carter par l'élément de recouvrement (18) et qui comporte un intervalle de guidage dont la dimension dans la direction perpendiculaire au plan de plaque du coulisseau correspondant essentiellement à celle de ce coulisseau.

2. Turbocompresseur (1) conforme à la revendication 1,
dans lequel lorsque le coulisseau (8) et à l'état fermé l'extrémité avant de ce coulisseau (8) est située à la partie interne de l'ouverture de liaison des flux (4) et une surface externe (14, 114) du coulisseau (8) s'applique sur une surface interne (13, 113) de l'ouverture de liaison des flux (4).

3. Turbocompresseur (1) conforme à l'une des revendications précédentes,
dans lequel le coulisseau (8) s'aminci vers son extrémité avant dans son plan de plaque (xy) et transversalement (y) à la direction de translation (x).

4. Turbocompresseur (1) conforme à l'une des revendications précédentes,
dans lequel parmi la surface interne (113) de l'ouverture de liaison des flux (4) et la surface externe (114) du coulisseau (8) l'une des ces surfaces et concave tandis que l'autre est convexe.

5. Turbocompresseur (1) conforme à l'une des revendications précédentes, comprenant un élément coulissant (9) à une extrémité duquel est formé le coulisseau (8), et qui comporte un plateau de guidage (10) dont le plan (yz) est perpendiculaire au plan de plaque (xy) du coulisseau (8), le plateau de guidage (10) de l'élément coulissant (9) limitant le mouvement de coulissement du coulisseau (8).

6. Turbocompresseur (1) conforme à la revendication 5,
dans lequel plateau de guidage (10) est guidé par la surface interne de l'élément de recouvrement (12).

7. Turbocompresseur (1) conforme à la revendication 5,
dans lequel l'élément coulissant (9) comporte, sur son côté opposé au coulisseau (8) par rapport au plateau de guidage (10) un arbre de guidage (11) qui est entouré par un manchon de guidage (17) maintenu par l'élément de recouvrement (12).

8. Turbocompresseur (1) conforme à la revendication 7,
dans lequel dans l'arbre de guidage (11) vient en prise une tige d'actionneur permettant d'actionner l'élément coulissant (9) au moyen d'un joint d'articulation à rotule.

9. Turbocompresseur (1) conforme à l'une des revendications 5 à 8,
dans lequel le plateau de guidage (10) comporte des perçages traversants (18) ou des rainures sur sa périphérie externe.

10. Véhicule automobile comprenant un turbocompresseur (1) conforme à l'un des revendications précédentes.
